# EUROPÄISCHE PATENTSCHRIFT

(11) **EP 2 745 798 B1**
(45) Veröffentlichungstag und Bekanntmachung des Hinweises auf die Patenterteilung: **22.02.2017**
(21) Anmeldenummer: 13196626.9
(22) Anmeldetag: 11.12.2013
(51) Int. Cl.: A61C 7/08, A61C 7/14, A61C 7/30, A61C 7/12

(54) **Satz von Führungselementen mit zugehörigen kieferorthopädischen Behandlungschienen**
Set of guiding elements with associated orthodontic splints.
Jeu d'éléments de guidage avec gouttière orthodontiques associées.

(30) Priorität: 21.12.2012 DE 102012224328
(43) Veröffentlichungstag der Anmeldung: 25.06.2014
(73) Patentinhaber: Widu, Friedrich, 85435 Erding (DE)
(72) Erfinder: Widu, Friedrich, 85435 Erding (DE)
(74) Vertreter: Taruttis, Stefan Georg

(56) Entgegenhaltungen:
- WO-A1-98/06347
- DE-A1-102010 008 749
- US-A- 5 186 623
- US-A- 5 653 588
- US-A1- 2003 118 967
- US-A1- 2009 191 502
- US-A1- 2011 129 786

## Beschreibung

Die Erfindung betrifft einen Satz von Führungselementen mit zugehörigen kieferorthopädischen Behandlungsschienen.

Für die kieferorthopädische Behandlung von Patienten gibt es unter anderem folgende zwei Varianten:
In einer ersten Variante mit festsitzenden Klammern werden Brackets auf die zu behandelnden Zähne des Patienten geklebt und durch einen kieferorthopädischen Draht miteinander verbunden. Die Brackets weisen ein Pad zur Verbindung mit dem Zahn und einen Bracketbody mit einem Slot auf, der den Drahtbogen aufnimmt. Die Brackets können bukkal oder lingual angeordnet sein.

In einer zweiten Variante werden kleine Führungselemente auf die zu behandelnden Zähne des Patienten geklebt. Der Patient erhält eine zugehörige Behandlungsschiene, in die der Patient "beißt", wodurch die Führungselemente auf den Zähnen in Eingriff mit entsprechend zugeordneten Führungstaschen in der Behandlungsschiene kommen. Die Führungstaschen sind so in der Behandlungsschiene angeordnet, dass sie über die Führungselemente die gewünschten kieferorthopädischen Kräfte und/oder Drehmomente auf die Zähne ausüben.

Die gesamte kieferorthopädische Behandlung des Patienten wird in dieser Variante in der Regel am Computer mit Hilfe einer Software geplant, d.h. eine vorliegende Ausgangssituation wird in eine gewünschte Zielsituation überführt: Dazu werden die Führungselemente, bspw. aus einer vordefinierten Bibliothek von Führungselementen, auf den zu behandelnden Zähnen angeordnet. Anschließend werden verschiedene Behandlungsstadien definiert, innerhalb derer bestimmte Teilschritte der Behandlung erzielt werden sollen. Für jedes dieser Behandlungsstadien wird eine Behandlungsschiene berechnet und anschließend hergestellt. Sind Behandlungen im Ober- und Unterkiefer nötig, so erhält der Patient für jeden Behandlungsschritt die notwendigen Behandlungsschienen für den Ober- und den Unterkiefer. Der Patient wechselt nach Abschluss eines Behandlungsstadiums die Behandlungsschiene, d.h. er tauscht die "alte" gegen die "neue" Behandlungsschiene aus, bis die Behandlung abgeschlossen ist. Bei dieser auch Aligner-Therapie genannten Behandlung werden in der Regel 20 Behandlungsstadien definiert, wobei jedoch auch eine geringere oder höhere Anzahl von Stadien möglich ist.

Ein Nachteil der ersten Variante ist, dass sie bei bukkalen Brackets optisch nicht ansprechend ist und auch mit einem hohen hygienischen Aufwand seitens des Patienten verbunden ist. Ein Nachteil der zweiten Variante ist, dass bestimmte Behandlungsschritte, bspw. die Rotation oder Angulation oder Extrusion eines Zahnes, mit den Behandlungsschienen nur schwierig oder gar nicht durchgeführt werden können.

Die US 5186623 A beschreibt einen Positionierer aus Elastomer, der eingesetzt wird, wenn Zähne aus einer Fehlstellung bereits in eine vorbestimmte Orientierung gebracht sind, d.h. am Ende der eigentlichen kieferorthopädischen Behandlung, wenn die Zähne in der Zielposition angekommen sind. Der Positionierer weist Ausnehmungen auf, die mit den Zahnoberflächen in Eingriff treten können, und darin Einbuchtungen, die ein Kopplungselement aufnehmen. Diese Einbuchtungen haben eine Form, die nach dem Kopplungselement einschließlich einer Abdeckkappe oder Abdeckwicklung gebildet ist.

Die WO 98/06347 A1 beschreibt eine Haltevorrichtung, mit der ein linguales Bracket in Abhängigkeit von der Position eines labialen Brackets auf der Innenseite der Zähne ausgerichtet werden kann.

Aufgabe der vorliegenden Erfindung ist es, ein einfacheres Behandlungssystem anzugeben, das die zuvor genannten Nachteile überwindet.

Die Aufgabe wird erfindungsgemäß durch einen Satz von Führungselementen mit zugehörigen Behandlungsschienen gemäß Anspruch 1 gelöst.

Ein Führungselement umfasst somit mindestens einen Slot. Durch diesen mindestens einen Slot ist das Führungselement zu einem Hybridelement geworden: Es kann sowohl im Rahmen einer Therapie mit einem Aligner wie ein herkömmliches Führungselement verwendet werden aber auch wie ein herkömmliches Standardbracket im Rahmen einer Therapie mit Standardbrackets verwendet werden.

In der Regel wird es nicht möglich sein, dass der Patient die Behandlungsschiene trägt, wenn ein kieferorthopädischer Behandlungsbogen in die Führungselemente einligiert ist, da die Behandlungsschiene in diesem Fall Freiräume für den Behandlungsbogen aufweisen müsste. In einem solchen Fall würde der Patient die Behandlungsschiene tragen, bis ein Wechsel zu der nächsten Behandlungsschiene anfällig wäre. Es würde dann jedoch nicht zu der nächsten Behandlungsschiene gewechselt, sondern ein kieferorthopädischer Behandlungsbogen eingesetzt, um damit einen nächsten Behandlungsschritt durchzuführen, bspw. die Extrusion eines Zahnes. Erst wenn dieser Behandlungsschritt abgeschlossen wäre, würde der kieferorthopädische Behandlungsbogen herausgenommen und zu der nächsten Behandlungsschiene gewechselt. Mit Hilfe der Führungselemente würde somit entweder ein Behandlungsschritt mit den Behandlungsschienen durchgeführt oder ein Behandlungsschritt mit Hilfe eines kieferorthopädischen Behandlungsbogens durchgeführt. Dabei kann beliebig oft zwischen diesen beiden Behandlungsvarianten gewechselt werden und es können auch beliebig viele Schritte einer Behandlungsvariante nacheinander durchgeführt werden, bevor wieder zu der anderen gewechselt wird. Dies gibt dem behandelnden Kieferorthopäden eine große Behandlungsfreiheit.

In Ausnahmefällen ist es jedoch möglich, beide Behandlungsvarianten parallel durchzuführen. Ist eine Behandlungsschiene bspw. nur über einen Teilbereich eines Kiefers geführt, bspw. über die linke Hälfte des Unterkiefers, so könnte in der rechten Hälfte eine Behandlung mit einem kieferorthopädischen Behandlungsbogen erfolgen, bspw. die Extrusion eines Zahnes. Ferner ist es möglich, die Behandlungsschiene an bspw. einem Zahn in gingival-okklusaler Richtung zu verkürzen, um dort ein Führungselement für eine Extrusion anzuordnen.

Die mindestens eine Eingriffsfläche kann eine distale und/oder eine mesiale und/oder eine okklusale Eingriffsfläche sein. Ist das Führungselement ein bukkales oder ein linguales Führungselement, kann die mindestens eine Eingriffsfläche auch eine bukkale oder linguale Eingriffsfläche sein bzw. umfassen.

Ein Führungselement weist vorteilhaft mindestens zwei und weiter bevorzugt mindestens drei Slots auf.

Bevorzugt ist mindestens einer des mindestens einen Slots selbstligierend. Es ist jedoch auch möglich und liegt im Rahmen der Erfindung, dass Hooks oder Knöpfe oder ähnliches am Führungselement vorgesehen sind, um daran eine Ligatur zu befestigen, um einen kieferorthopädischen Behandlungsbogen einzuligieren.

Das Führungselement besteht bevorzugt zumindest teilweise aus einem Keramikmaterial, einem Kunststoffmaterial, bspw. PEAK, PEEK, PEKK, PEEK, PEKKTON, einem Metall, wie bspw. Gold, oder einer Legierung und weist optional mindestens teilweise eine Beschichtung auf, bspw. aus Teflon, um Reibungs- und/oder Korrosionseigenschaften festzulegen oder zu beeinflussen.

Vorteilhaft weist mindestens einer des mindestens einen Slots im Querschnitt eine kreisrunde, eine quadratische, eine rechteckige oder polygonale Form auf.

Ein Slot kann in dem Führungselement in okklusaler-gingivaler-Richtung mittig oder gingival oder okklusal angeordnet sein.

Bevorzugt ist eine Form und/oder Größe der Zahnverbindungsfläche auf einen vorbestimmten Zahn angepasst ist, bspw. auf einen Eckzahn oder einen Schneidezahn.

Da das Führungselement als Hybridelement auch wie ein Standardbracket im Rahmen einer herkömmlichen Standardbrackettherapie verwendbar sein soll, kann es jegliche Zusatzbauteile aufweisen, die von Standardbrackets bekannt sind, wie bspw. Hook, Wing, Knopf, Röhrchen oder einen Hinterschnitt, bspw. um ein Gummi einzuhängen.

Für eine kieferorthopädische Behandlung eines Patienten ist somit ein Satz von mindestens zwei Führungselementen sowie mindestens eine zugehörige Behandlungsschiene erforderlich. In der Regel ist ein Führungselement für jeden Zahn des zu behandelnden Kiefers erforderlich. Es liegt jedoch im Rahmen der Erfindung, dass nicht alle bzw. nur einige Zähne eines Kiefers mit den Führungselementen versehen werden.

Die mindestens erforderliche eine Behandlungsschiene kann eine Behandlungsschiene für den Oberkiefer oder eine für den Unterkiefer sein. In der Regel wird jedoch eine Behandlungsschiene für den Oberkiefer und eine für den Unterkiefer erforderlich sein, da in vielen Fällen eine Behandlung beider Kiefer erfolgt.

Erfindungsgemäß werden mehrere Behandlungsschienen für den Oberkiefer und/oder den Unterkiefer für jeweils verschiedene Behandlungsstadien einer kieferorthopädischen Behandlung bereitgestellt.

Es ist möglich und liegt im Rahmen der Erfindung, dass für mindestens einen Zahn des Patienten mehrere Führungselemente vorgesehen sind, um sie auf dem Zahn in mindestens einem Behandlungsstadium gleichzeitig anzuordnen.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: eine perspektivische Ansicht eines Oberkiefers eines Patienten, wobei auf den Zähnen Führungselemente und eine Behandlungsschiene angeordnet sind,
- Fig. 2: a) eine Draufsicht, b) eine perspektivische Ansicht, c) eine erste Seitenansicht und d) eine zweite Seitenansicht eines Führungselements,
- Fig. 3: a) eine Draufsicht, b) eine perspektivische Ansicht, c) eine erste Seitenansicht und d) eine zweite Seitenansicht eines Führungselements in einer weiteren Ausführungsform,
- Fig. 4: a) eine Draufsicht, b) eine perspektivische Ansicht, c) eine erste Seitenansicht und d) eine zweite Seitenansicht eines Führungselements in einer weiteren Ausführungsform,
- Fig. 5: a) eine Draufsicht, b) eine perspektivische Ansicht, c) eine erste Seitenansicht und d) eine zweite Seitenansicht eines Führungselements in einer weiteren Ausführungsform,
- Fig. 6: a) eine Draufsicht, b) eine perspektivische Ansicht, c) eine erste Seitenansicht und d) eine zweite Seitenansicht eines Führungselements in einer weiteren Ausführungsform,
- Fig. 7: a) eine Draufsicht, b) eine perspektivische Ansicht, c) eine erste Seitenansicht und d) eine zweite Seitenansicht eines Führungselements in einer weiteren Ausführungsform,
- Fig. 8: a) eine Draufsicht, b) eine perspektivische Ansicht, c) eine erste Seitenansicht und d) eine zweite Seitenansicht eines Führungselements in einer weiteren Ausführungsform,
- Fig. 9: a) eine Draufsicht, b) eine perspektivische Ansicht, c) eine erste Seitenansicht und d) eine zweite Seitenansicht eines Führungselements in einer weiteren Ausführungsform,
- Fig. 10: a) eine Draufsicht, b) eine perspektivische Ansicht, c) eine erste Seitenansicht und d) eine zweite Seitenansicht eines Führungselements in einer weiteren Ausführungsform,
- Fig. 11: a) eine Draufsicht, b) eine perspektivische Ansicht, c) eine erste Seitenansicht und d) eine zweite Seitenansicht eines Führungselements in einer weiteren Ausführungsform,
- Fig. 12: a) eine Draufsicht, b) eine perspektivische Ansicht, c) eine erste Seitenansicht und d) eine zweite Seitenansicht eines Führungselements in einer weiteren Ausführungsform,
- Fig. 13: eine perspektivische Ansicht eines Führungselements in einer weiteren Ausführungsform,
- Fig. 14: a) eine Draufsicht, b) eine perspektivische Ansicht, c) eine erste Seitenansicht und d) eine zweite Seitenansicht eines Führungselements in einer weiteren Ausführungsform, und
- Fig. 15: a) eine Draufsicht, b) eine perspektivische Ansicht und c) eine Seitenansicht eines Führungselements in einer weiteren Ausführungsform.

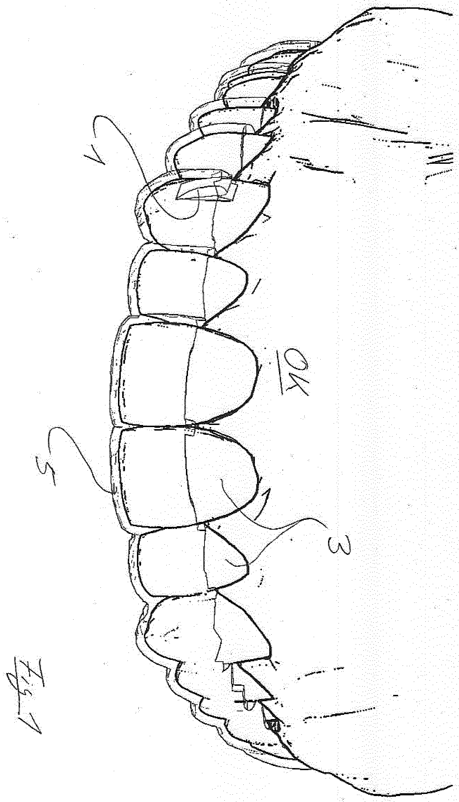

In Fig. 1 ist eine Behandlungssituation eines Patienten gezeigt, der gemäß der oben beschriebenen Aligner-Therapie, s.o. die Variante 2, behandelt wird. Die Zähne 3 des Oberkiefers OK greifen in eine kieferorthopädische Behandlungsschiene 5, wobei zur Vereinfachung auf nur einem Zahn 3 ein Führungselement 1 angeordnet ist. Das Führungselement 1 ist auf den bukkalen Zahnflächen der Zähne 3 angeordnet und über eine herkömmliche Klebeverbindung mit diesen verbunden. Die Art der Klebeverbindung entspricht derjenigen, die beim Kleben von herkömmlichen Brackets verwendet wird. Mittels der Führungselemente 1 wird eine Kraft von der Behandlungsschiene 5 auf die zugehörigen Zähne 3 ausgeübt, wie oben beschrieben.

Die Behandlungsschiene 5 weist in gingival-okklusaler-Richtung verschiedene Höhen auf: Im Bereich der Backenzähne ist sie bis an den gingivalen Rand geführt, im Bereich der Eckzähne weist sie nur einen geringen Abstand von dem gingivalen Rand auf und im Bereich der Schneidezähne ist sie bis ungefähr zur Mitte der Schneidezähne geführt.

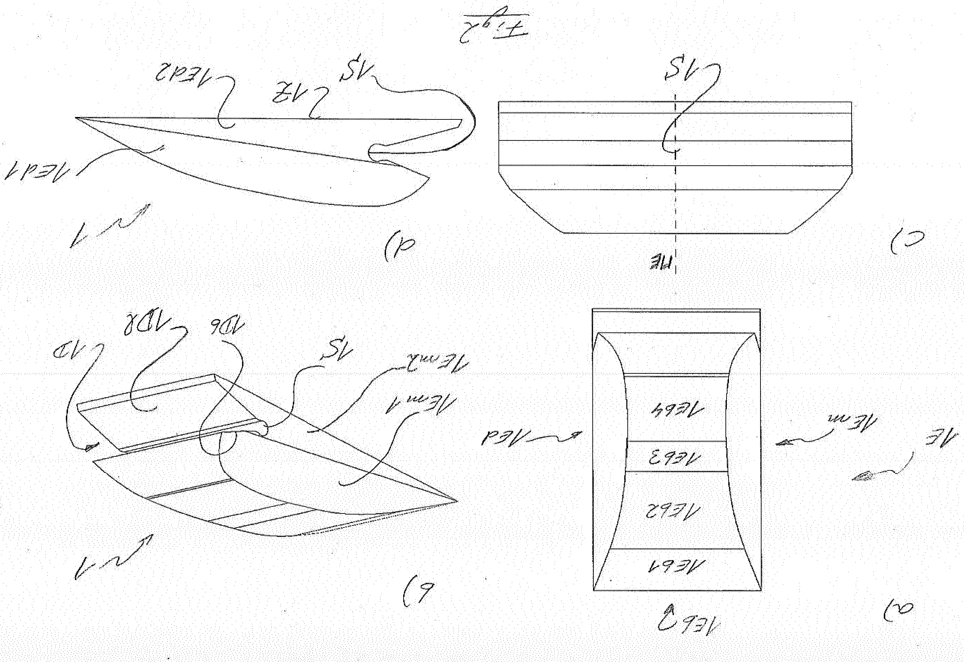

In Fig. 2 ist in a) eine Draufsicht, b) eine perspektivische Ansicht, c) eine erste Seitenansicht und d) eine zweite Seitenansicht eines Führungselements 1 dargestellt.

Das Führungselement weist Eingriffsflächen 1E auf, mit denen es formschlüssig in eine Führungstasche der Behandlungsschiene 5 greift. Zur Ausbildung der Klebeverbindung zwischen dem Zahn 3 und dem Führungselement 1 ist die Zahnverbindungsfläche 1Z vorgesehen, mit der das Führungselement 1 auf die bukkale Zahnfläche des Zahns 3 geklebt ist.

Das Führungselement 1 weist eine bukkale Eingriffsfläche 1Eb auf, die in mehrere Abschnitte 1Eb1, 1Eb2, 1Eb3 und 1Eb4 unterteilt ist, wobei diese jeweils unter einem Winkel zueinander verlaufen, s. Fig. 1a) und 1d). Die Abschnitte 1Eb1 und 1Eb3 sind eben, wohingegen die Abschnitte 1Eb2 und 1Eb4 nach bukkal konvex gekrümmt sind. Dies ermöglicht ein leichtes Aufschieben der Behandlungsschiene 5 auf die Zähne 3 und ein leichtes Ablösen derselben.

Das Führungselement 1 weist eine mesiale und eine distale Eingriffsfläche 1Em, 1Ed auf, wobei diese jeweils in einzelne Abschnitte 1Em1, 1Em2, 1Ed1, 1Ed2 unterteilt sind. Die Eingriffsflächen 1Em, 1Ed verlaufen symmetrisch zu einer in Fig. 2c) vertikal verlaufenden Mittelebene ME. Die Abschnitte 1Ed1, 1Em1 verlaufen in einem Winkel zur Mittelebene ME. Die Abschnitte 1Ed2, 1Em2 verlaufen parallel zur Mittelebene ME.

Das Führungselement 1 weist ferner einen Slot 1S auf, um darin einen kieferorthopädischen Behandlungsdraht anzuordnen. Der Slot 1S weist vorliegend einen kreisrunden Querschnitt auf und ist senkrecht zur Längsachse der Führungselements 1 angeordnet. Das Führungselement 1 weist einen nahezu keilförmigen Drahteinführbereich 1D auf, um ein einfaches Einführen des kieferorthopädischen Drahtes in den Slot 1S zu ermöglichen. Der Drahteinführbereich 1D verläuft ebenfalls senkrecht zur Längsachse des Führungselements 1 und umfasst eine bukkale und eine linguale Drahteinführfläche 1Db, 1Dl.

Das Führungselement 1 bzw. der Slot 1S ist selbstligierend: Ein kieferorthopädischer Draht wird entlang und zwischen den Drahteinführflächen 1Db, 1Dl in den Slot 1S eingeführt, wobei der Draht an der engsten Stelle des Drahteinführbereichs 1D leicht verformt wird. Ist der Draht dann in dem Slot 1S angeordnet, so kann er nur durch Aufbringen einer entsprechenden gingival gerichteten Kraft wieder aus dem Slot 1S entfernt werden.

Die Behandlungsschiene 5 ist im Bereich des Führungselements 1 in gingival-okklusaler Richtung derart verkürzt, dass trotz des Eingriffes der Zähne 3 in die Behandlungsschiene 5 in dem Slot 1S ein kieferorthopädischer Draht angeordnet werden kann, um bspw. eine Extrusion durchzuführen, wie oben beschrieben.

Das Führungselement 1 ist einstückig hergestellt und besteht aus einem Kunststoff, bspw. in einem Spritzverfahren oder in einem Fräsverfahren hergestellt.

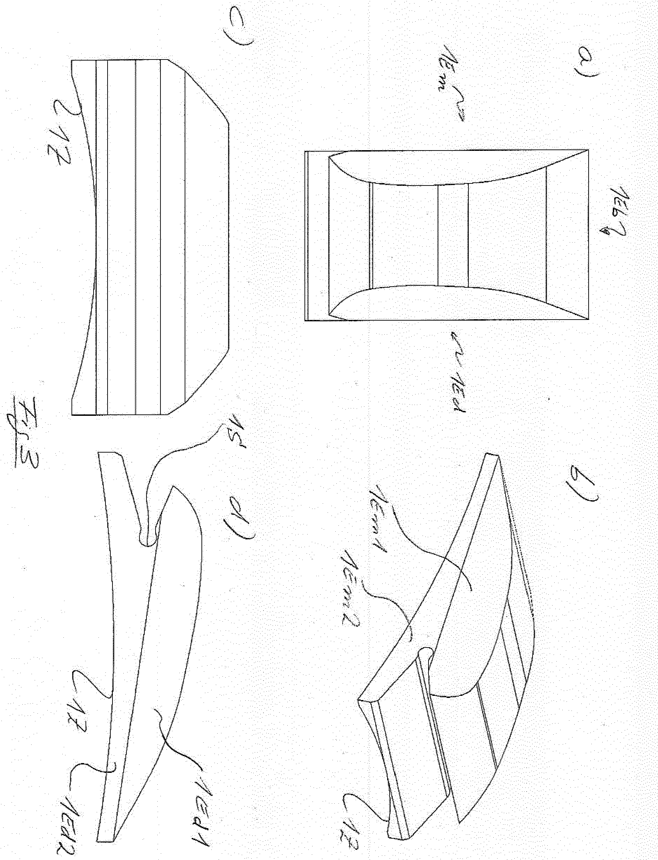

In Fig. 3 ist in a) eine Draufsicht, b) eine perspektivische Ansicht, c) eine erste Seitenansicht und d) eine zweite Seitenansicht des Führungselements 1 der Fig. 2 in einer weiteren Ausführungsform dargestellt. Die Ausführungsform der Fig. 3 unterscheidet sich von der der Fig. 2 dadurch, dass die Zahnverbindungsfläche 1Z nicht plan ist, sondern an die bukkale Zahnfläche eines Zahns 3 angepasst ist, vorliegend lediglich beispielhaft an einen 1er Oberkieferzahn. In Fig. 3c) ist eine Krümmung der Zahnverbindungsfläche 1Z um eine gingival-okklusale-Achse erkennbar. In Fig. 3d) ist eine Krümmung der Zahnverbindungsfläche 1Z um eine mesio-distale-Achse erkennbar.

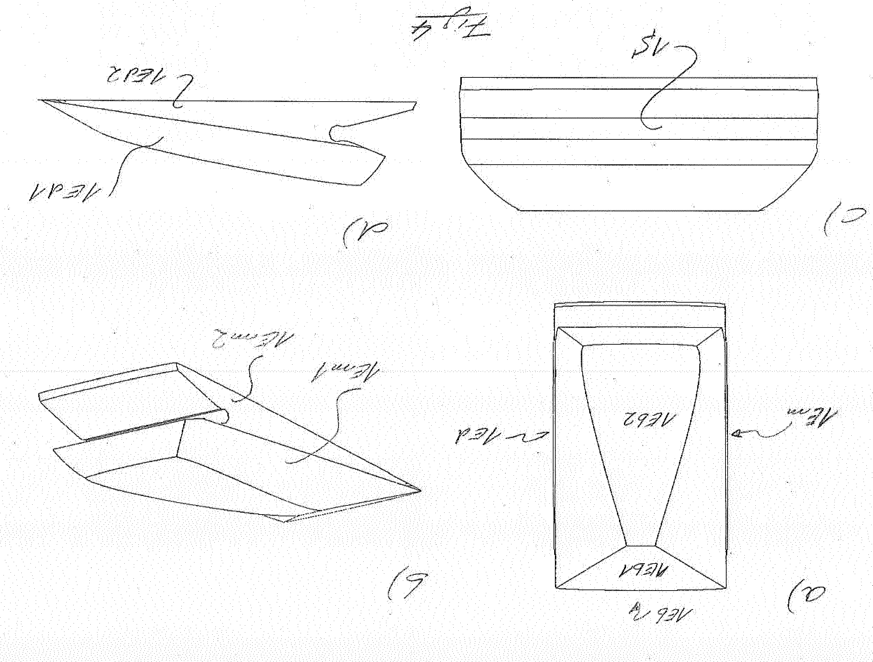

In Fig. 4 ist in a) eine Draufsicht, b) eine perspektivische Ansicht, c) eine erste Seitenansicht und d) eine zweite Seitenansicht des Führungselements 1 der Fig. 2 in einer weiteren Ausführungsform dargestellt. Die Ausführungsform der Fig. 4 unterscheidet sich von der der Fig. 2 dadurch, dass die Eingriffsflächen 1E eine andere Form aufweisen: Die bukkale Eingriffsfläche 1Eb ist in zwei Abschnitte 1Eb1, 1Eb2 unterteilt, die wiederum in einem Winkel zueinander verlaufen, um das Aufschieben der Behandlungsschiene 5 zu erleichtern, s. Fig. 4a) und Fig. 4c). Der bukkalen Abschnitte 1Eb1, 1Eb2 sind in der Draufsicht der Fig. 4a) keilförmig. Dementsprechend sind auch die Abschnitte 1Em1, 1Ed1 in der Draufsicht der Fig. 4a) nahezu keilförmig.

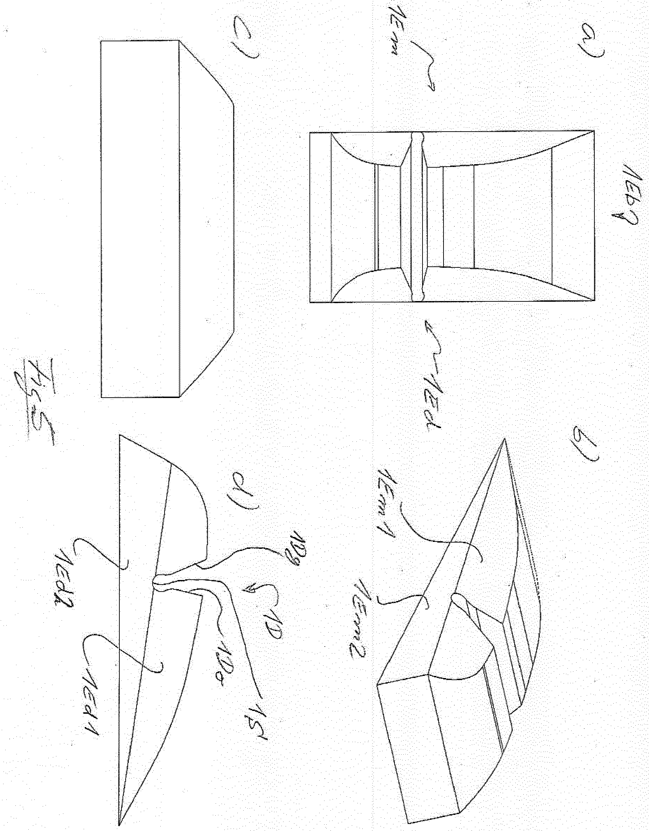

In Fig. 5 ist in a) eine Draufsicht, b) eine perspektivische Ansicht, c) eine erste Seitenansicht und d) eine zweite Seitenansicht des Führungselements 1 der Fig. 2 in einer weiteren Ausführungsform dargestellt. Das Führungselement 1 weist wiederum die bukkalen, mesialen und distalen Eingriffsflächen 1Eb, 1Em, 1Ed auf. Anders als in der Ausführungsform der Fig. 2 weist das Führungselement 1 der Fig. 5 einen Slot 1S auf, der in Längsrichtung des Führungselements 1 eher mittig angeordnet ist und von bukkal zugänglich ist. Ein Drahteinführbereich 1D weist eine gingivale und eine okklusale Drahteinführfläche 1Dg, 1Do auf.

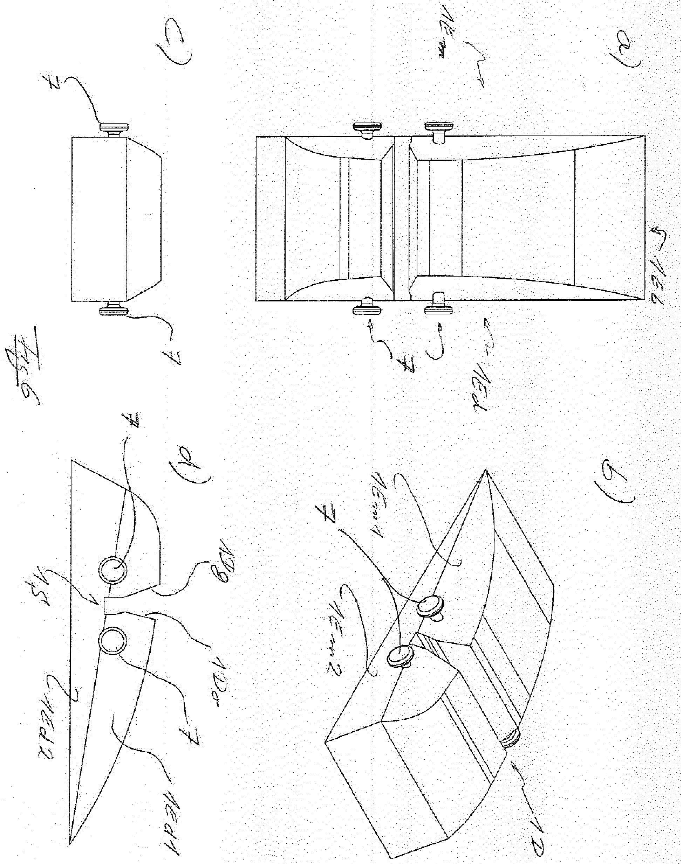

In Fig. 6 ist in a) eine Draufsicht, b) eine perspektivische Ansicht, c) eine erste Seitenansicht und d) eine zweite Seitenansicht des Führungselements 1 der Fig. 5 in einer weiteren Ausführungsform dargestellt. Das Führungselement 1 der Fig. 6 unterscheidet sich von dem der Fig. 5 dadurch, dass es einen nahezu quadratischen Slot 1S aufweist. Die gingivalen und okklusalen Drahteinführflächen 1Dg, 1Do bleiben unverändert.

Ein weiterer Unterschied sind die mesial und distal angeordneten Hooks 7, um mit deren Hilfe und einer Ligatur einen kieferorthopädischen Draht in den Slot 1 S zu ligieren.

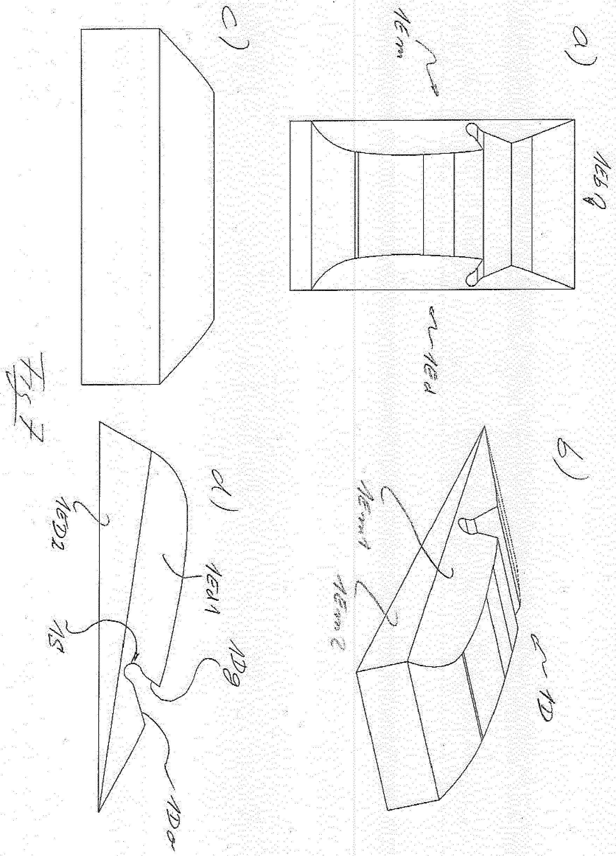

In Fig. 7 ist in a) eine Draufsicht, b) eine perspektivische Ansicht, c) eine erste Seitenansicht und d) eine zweite Seitenansicht des Führungselements 1 der Fig. 2 in einer weiteren Ausführungsform dargestellt. Das Führungselement 1 weist wiederum die bukkalen, mesialen und distalen Eingriffsflächen 1Eb, 1Em, 1Ed auf. Anders als in der Ausführungsform der Fig. 2 weist das Führungselement 1 der Fig. 7 einen Slot 1S auf, der in Längsrichtung des Führungselements 1 eher okklusal angeordnet ist und von okklusal zugänglich ist. Ein Drahteinführbereich 1D weist dementsprechend geneigte gingivale und eine okklusale Drahteinführflächen 1Dg, 1Do auf.

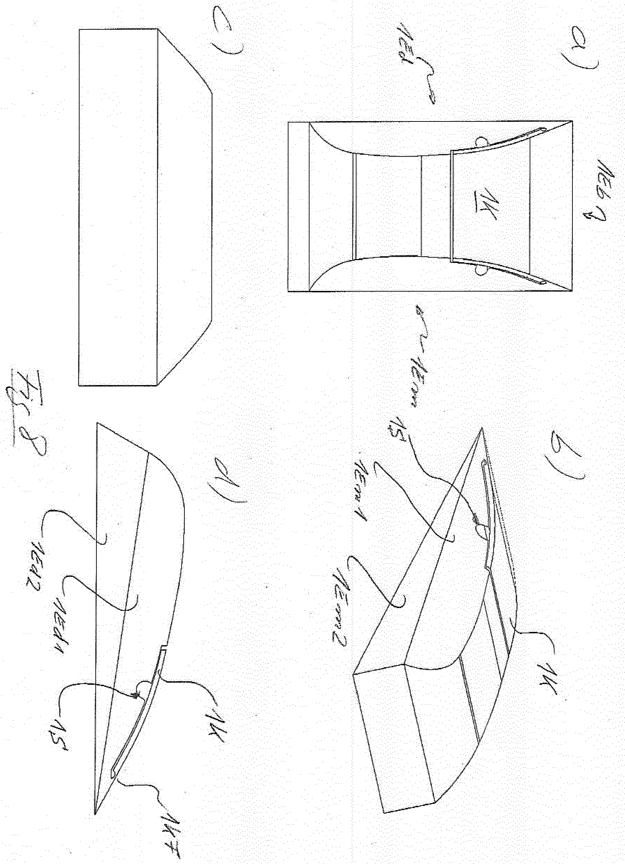

In Fig. 8 ist in a) eine Draufsicht, b) eine perspektivische Ansicht, c) eine erste Seitenansicht und d) eine zweite Seitenansicht des Führungselements 1 der Fig. 2 in einer weiteren Ausführungsform dargestellt. Das Führungselement 1 weist wiederum die bukkalen, mesialen und distalen Eingriffsflächen 1Eb, 1Em, 1Ed auf. Anders als in der Fig. 2 ist der Slot 1S jedoch unmittelbar bukkal angeordnet, so dass der Drahteinführbereich 1D entfällt. Ferner ist der Slot 1S hinter einer Klappe 1 K angeordnet, die integral mit dem Führungselement 1 gebildet ist und okklusal ein Filmscharnier 1KF aufweist, wodurch sie gelenkig angeordnet ist. Um einen Draht in dem Slot 1S anzuordnen, wird die Klappe 1K mit einem Hilfsmittel, bspw. einer Zange, angehoben und der Draht in den Slot 1S eingeführt. Anschließend wird die Klappe 1K wieder losgelassen, wodurch sie aufgrund der Rückstellkraft des Filmscharniers 1KF wieder ihre Ausgangslage einnimmt. Auf diese Weise ist ein selbstligierendes Führungselement 1 geschaffen.

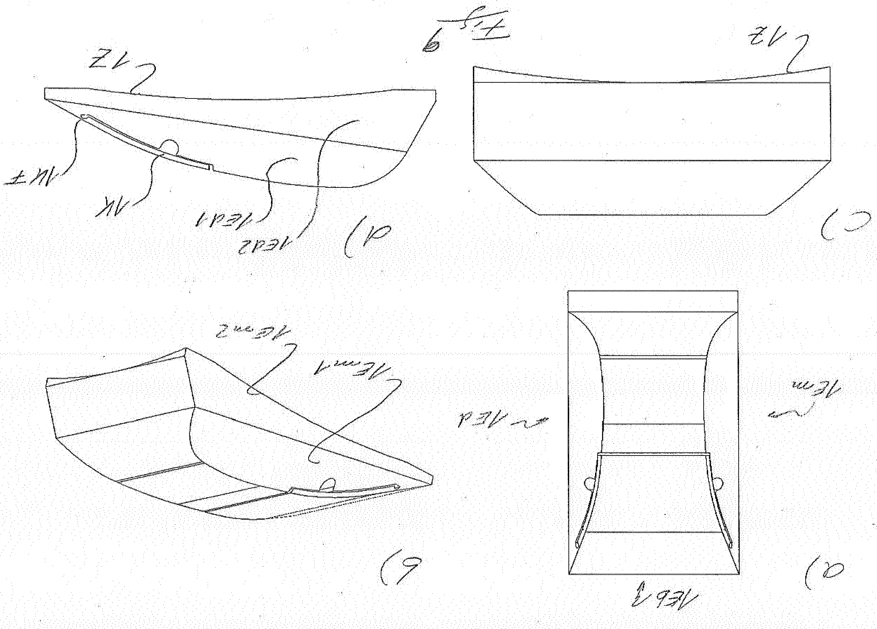

In Fig. 9 ist in a) eine Draufsicht, b) eine perspektivische Ansicht, c) eine erste Seitenansicht und d) eine zweite Seitenansicht des Führungselements 1 der Fig. 8 in einer weiteren Ausführungsform dargestellt. Das Führungselement 1 der Fig. 9 unterscheidet sich von dem der Fig. 8 dadurch, dass die Zahnverbindungsfläche 1Z nicht plan ist, sondern an einen Zahn angepasst ist, vorliegend einen 6er im UK. In Fig. 9c) ist eine Krümmung der Zahnverbindungsfläche 1Z um eine gingival-okklusale-Achse erkennbar. In Fig. 9d) ist eine Krümmung der Zahnverbindungsfläche 1Z um eine mesio-distale-Achse erkennbar.

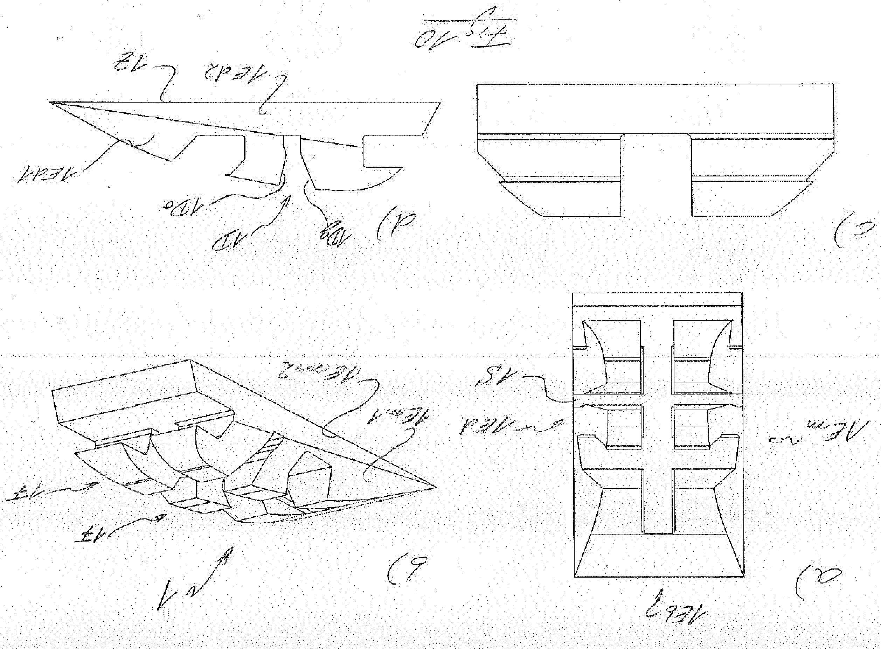

Fig. 10 zeigt in a) eine Draufsicht, b) eine perspektivische Ansicht, c) eine erste Seitenansicht und d) eine zweite Seitenansicht eines Führungselements 1 in einer weiteren Ausführungsform. Wiederum weist das Führungselement 1 mesiale, bukkale und distale Eingriffsflächen 1Em, 1Eb, 1Ed und einen Slot 1S auf. Der Slot 1S weist einen nahezu quadratischen Querschnitt auf. Dem Slot 1S ist ein Drahteinführbereich 1D mit einer gingivalen und einer okklusalen Drahteinführfläche 1Dg, 1Do zugeordnet. Um den Draht in dem Slot 1S mit Hilfe von Ligaturen befestigen zu können, sind vier Flügel 1 F vorgesehen. Gingival und okklusal des Slots 1S sind jeweils zwei Flügel 1F angeordnet. Am mesialen und am distalen Ende des Führungselements 1 sind ebenfalls zwei Flügel 1F angeordnet. Nach dem Einführen eines Drahtes in den Slot 1S kann dieser mit herkömmlichen Ligaturen mit Hilfe der Flügel 1 F in dem Slot 1S befestigt werden. In dem in Fig. 10 gezeigten Beispiel sind vier im Wesentlichen eckige Flügel 1 F gezeigt. Es ist verständlich, dass eine andere Anzahl von Flügeln 1 F sowie andere Formen von Flügeln 1F und eine andere Anordnung der Flügel 1F gewählt werden kann.

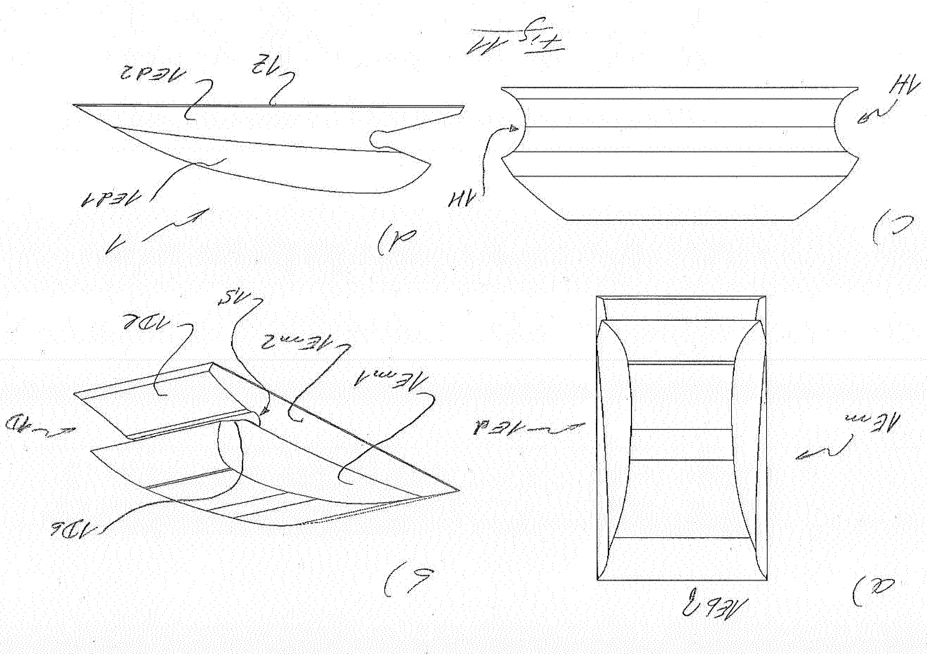

In Fig. 11 ist in a) eine Draufsicht, b) eine perspektivische Ansicht, c) eine erste Seitenansicht und d) eine zweite Seitenansicht des Führungselements 1 der Fig. 2 in einer weiteren Ausführungsform dargestellt. Die Ausführungsform der Fig. 11 unterscheidet sich von der der Fig. 2 dadurch, dass in den mesialen und distalen Eingriffsflächen 1Em, 1Ed jeweils ein Hinterschnitt 1H gebildet ist. Die Hinterschnitte 1H dienen dazu, einen Gummizug über mehrere Führungselemente 1 derart zu realisieren, dass der Gummiring abschnittsweise in die Hinterschnitte 1H greift und auf diese Weise dort gehalten bzw. fixiert ist.

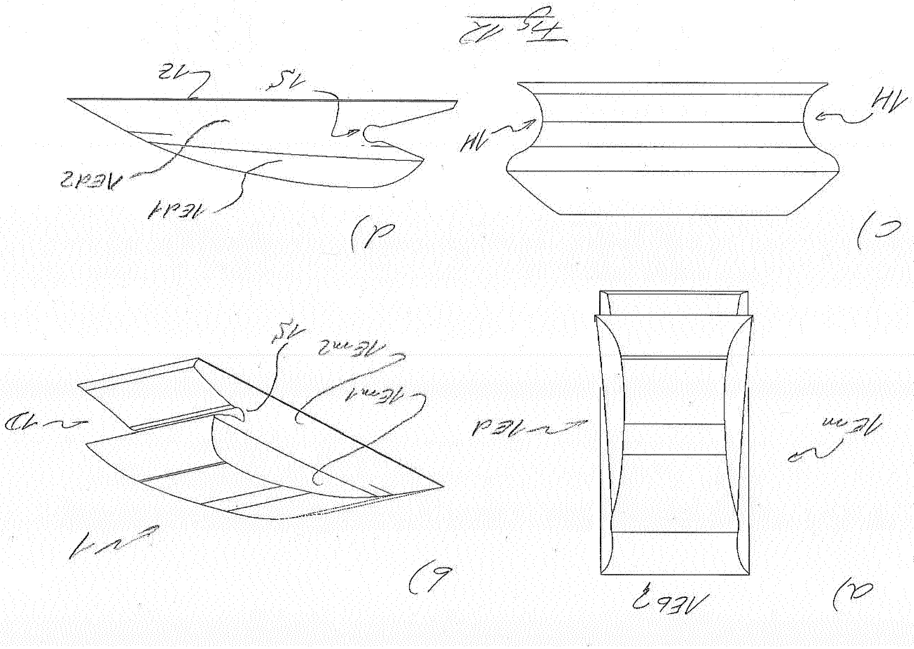

In Fig. 12 ist in a) eine Draufsicht, b) eine perspektivische Ansicht, c) eine erste Seitenansicht und d) eine zweite Seitenansicht des Führungselements 1 der Fig. 11 in einer weiteren Ausführungsform dargestellt. Die Ausführungsform der Fig. 12 unterscheidet sich von der der Fig. 11 dadurch, dass die Hinterschnitte 1H stärker ausgebildet sind, um auch Gummiringe mit einem größeren Durchmesser und somit einer stärkeren Zugkraft verwenden zu können.

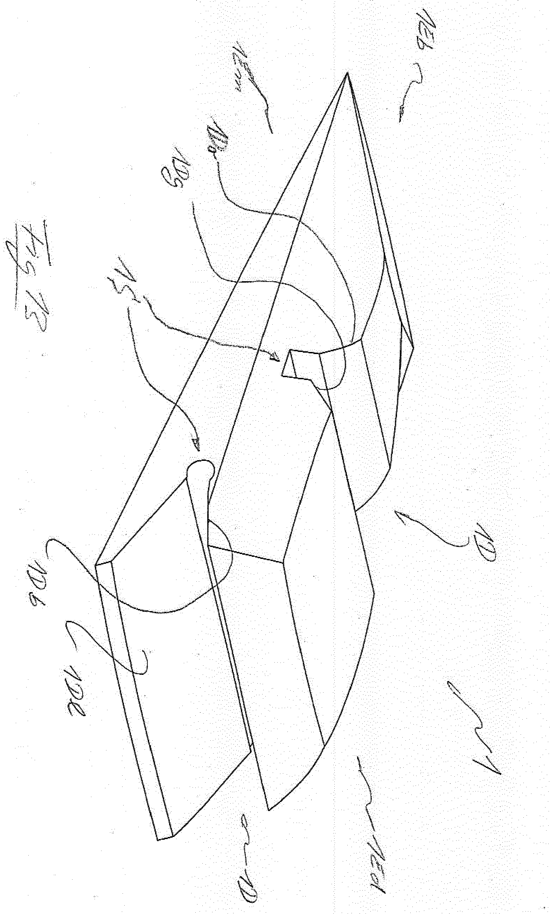

In Fig. 13 ist eine weitere Ausführungsform eines Führungselements 1 dargestellt, das wiederum mesiale, distale und bukkale Eingriffsflächen 1Em, 1Ed, 1Eb aufweist. Im Gegensatz zu den bisher gezeigten Ausführungsformen weist das Führungselement 1 der Fig. 13 jedoch zwei Slots 1S auf, von denen einer bukkal und einer gingival angeordnet ist. Es sind jeweils gingivale und okklusale bzw. bukkale und linguale Drahteinführflächen 1Dg, 1Do, 1Db, 1Dl vorgesehen. Der bukkale Slot 1S weist einen quadratischen Querschnitt auf, wohingegen der gingivale Slot 1S einen kreisrunden Querschnitt aufweist.

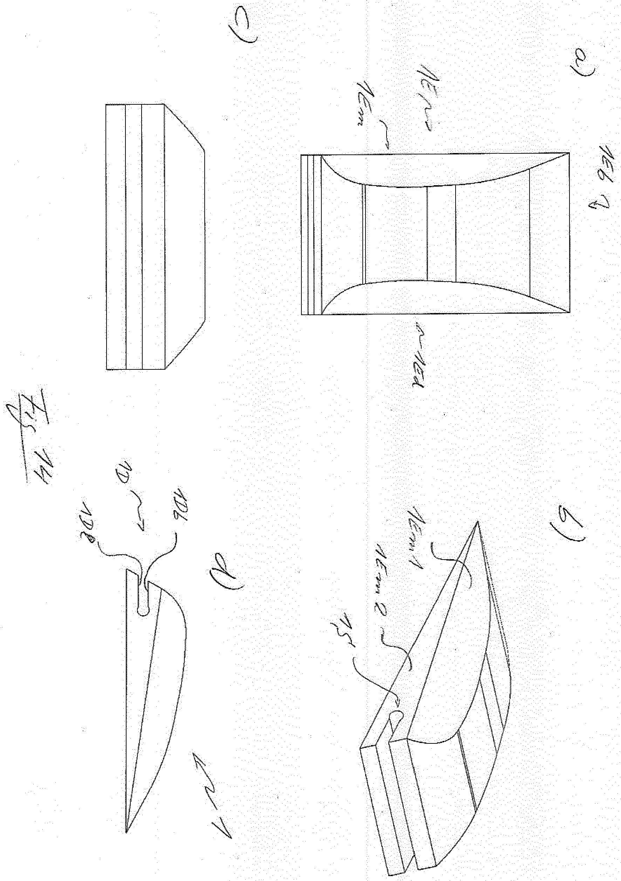

In Fig. 14 ist in a) eine Draufsicht, b) eine perspektivische Ansicht, c) eine erste Seitenansicht und d) eine zweite Seitenansicht des Führungselements 1 der Fig. 2 in einer weiteren Ausführungsform dargestellt. Im Unterschied zu dem Führungselement 1 der Fig. 2 weist das Führungselement 1 der Fig. 14 einen selbstligierenden Slot 1S auf. Der Slot 1S weist einen kreisrunden Querschnitt auf. Es ist eine bukkale und eine linguale Drahteinführfläche 1Db, 1Dl vorgesehen. Ein kieferorthopädischer Draht wird von gingival durch Verschiebung entlang der Drahteinführflächen 1Db, 1Dl in den Slot 1S eingeführt. Die Drahteinführflächen 1Db, 1Dl verlaufen nahezu parallel zueinander, können alternativ in einem Winkel zueinander verlaufen, insbesondere derart, dass sie von gingival nach okklusal aufeinander zu laufen. Der Abstand der Drahteinführflächen 1Db, 1Dl zueinander ist so bemessen, dass er ein wenig kleiner ist als der Durchmesser des kieferorthopädischen Drahtes, und das Elastizitätsmodul des Materials des Führungselements 1 ist so bemessen, dass es kleiner ist als das des kieferorthopädischen Drahts. Dadurch kann der kieferorthopädische Draht unter manueller Krafteinwirkung in den Slot 1S eingeführt werden, jedoch sich nicht selbst aus diesem lösen, wodurch der kieferorthopädische Draht in dem Slot 1S gehalten ist. Zum Entfernen des kieferorthopädischen Drahtes aus dem Slot 1S wird dieser unter manueller Krafteinwirkung wieder entlang der Drahteinführflächen 1Db, 1Dl nach gingival aus dem Führungselement 1 heraus bewegt.

In dieser Ausführungsform wird das Einführen des kieferorthopädischen Drahtes dadurch erreicht, dass das Führungselement 1 aus einem weicheren Material besteht als der kieferorthopädische Draht und der Abstand der Drahteinführflächen 1Db, 1Dl zueinander entsprechend gewählt ist. In einer Variante dieser Ausführungsform wird statt eines weicheren Materials eine geeignete Formgebung gewählt: Der in Fig. 14d) gezeigte konvexe Materialverlauf oberhalb der bukkalen Drahteinführungsfläche 1Db nimmt in dieser Variante einen konkaven Materialverlauf ein, d.h. er weist von einem Maximum einen von okklusal nach gingival spitz verlaufenden Materialverlauf auf, wodurch eine elastische Lippe gebildet ist, deren linguale Seite die bukkale Drahteinführungsfläche 1Db bildet. Beim Einführen des kieferorthopädischen Drahtes bewegt sich diese Lippe elastisch nach bukkal und der kieferorthopädische Draht kann in den Slot 1S eingeführt werden, woraufhin sich die elastische Lippe wieder zurück in ihre Ausgangsposition bewegt. Zum Entfernen des kieferorthopädischen Drahtes aus dem Slot 1S wird dieser unter Verschwenkung der Lippe nach bukkal aus dem Slot 1S und entlang der Drahtführungsflächen 1Db, 1Dl bewegt, bis sich dieser außerhalb des Führungselements 1 S befindet, woraufhin sich die Lippe wieder in ihre Ausgangslage zurück bewegt.

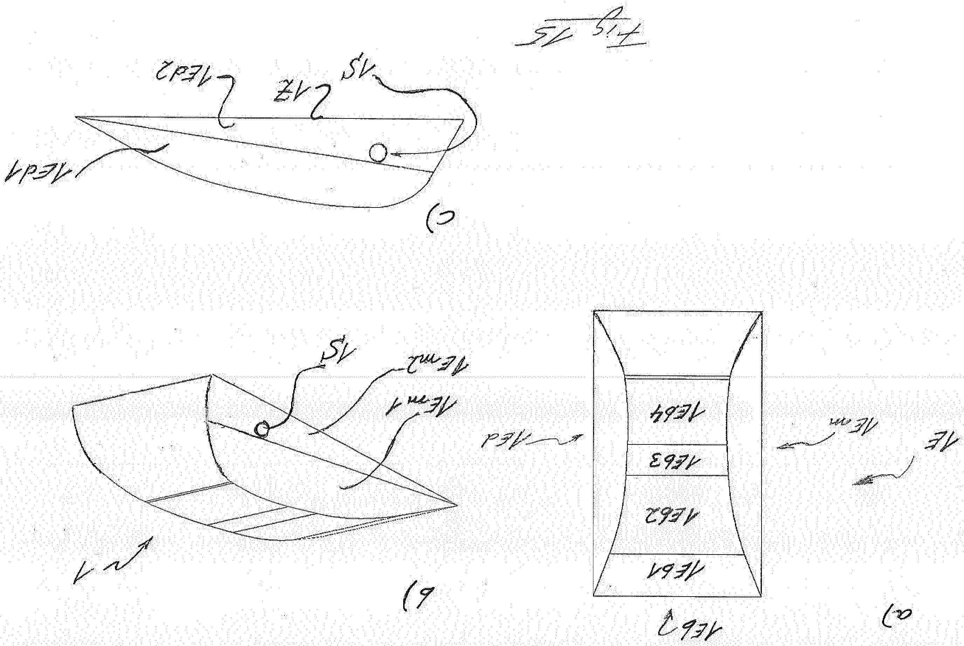

In Fig. 15 ist in a) eine Draufsicht, b) eine perspektivische Ansicht und c) eine Seitenansicht des Führungselements 1 der Fig. 2 in einer weiteren Ausführungsform dargestellt. Im Unterschied zu dem Führungselement 1 der Fig. 2 weist das Führungselement 1 der Fig. 15 keinen Drahteinführbereich 1D auf. Der Slot 1S des Führungselements 1 der Fig. 15 liegt vollständig in dem Führungselement 1. Ein kieferorthopädischer Draht wird somit während einer Behandlung nicht in bukkal-lingualer-Richtung eingeführt, sondern in mesio-distaler-Richtung in das Führungselement 1 eingeführt. Da diese Art des Einführens bei mehreren Führungselementen 1 in einem Kiefer oder bei Führungselementen 1 auf benachbarten Zähnen mit einem größeren Aufwand verbunden ist als bei Führungselementen 1 mit Ligaturen, werden die Führungselemente 1 der Fig. 15 bevorzugt so wenig wie möglich eingesetzt, bspw. nur ein- oder zweimal in einem Kiefer, und im Übrigen bspw. Führungselemente 1 gemäß den Figuren 2 bis 14.

Die Führungselemente 1 können im Rahmen einer kieferorthopädischen Behandlung in zweifacher Weise verwendet werden: Mit Hilfe der Führungselemente 1 kann zum einen eine Kraft von den Behandlungsschienen 5 auf die den Führungselementen 1 zugeordneten Zähne 3 ausgeübt werden, um eine kieferorthopädische Bewegung der Zähne 3 zu erzielen. Zum anderen kann mit den Führungselementen 1 eine kieferorthopädische Behandlung mit Hilfe eines kieferorthopädischen Drahtes erfolgen, wie dies mit herkömmlichen Brackets bekannt ist, indem ein Draht in den Slot 1S des jeweiligen Führungselements 1 angeordnet wird.

Dabei entsprechen die geometrischen Abmessungen der Führungselemente 1 denen, die bei bekannten Führungselementen für die Aligner-Therapie vorliegen. Insbesondere ist die Höhe derselben in lingual-bukkaler Richtung kleiner als 2mm und bevorzugt kleiner als 1,5mm.

### Bezugszeichenliste

- 1: Führungselement
- 1D: Drahteinführbereich
- 1Db: bukkale Drahteinführfläche
- 1Dg: gingivale Drahteinführfläche
- 1Dl: linguale Drahteinführfläche
- 1Do: okklusale Drahteinführfläche
- 1E: Eingriffsfläche
- 1Eb: bukkale Eingriffsfläche
- 1Ed: distale Eingriffsfläche
- 1Em: mesiale Eingriffsfläche
- 1F: Flügel
- 1H: Hinterschnitt
- 1K: Klappe
- 1KF: Filmscharnier
- 1S: Slot
- 1Z: Zahnverbindungsfläche
- 3: Zahn
- 5: kieferorthopädische Behandlungsschiene
- 7: Hook

- OK: Oberkiefer
- ME: Mittelebene

## Patentansprüche

1. Satz von mindestens zwei Führungselementen (1) für einen Patienten sowie mehrere zugehörige Behandlungsschienen (5) für den Patienten, wobei die mehreren Behandlungsschienen für den Oberkiefer und/oder die mehreren Behandlungsschienen (5) für den Unterkiefer für jeweils verschiedene Behandlungsstadien einer kieferorthopädischen Behandlung sind, wobei die Führungselemente (1) für einen Zahn (3) mit einer Zahnverbindungsfläche (1Z) und mindestens einem Slot (1S) zur Aufnahme eines kieferorthopädischen Behandlungsbogens sind, wobei die Führungselemente (1) zum Zusammenwirken mit den kieferorthopädischen Behandlungsschienen (5) mit mindestens einer Eingriffsfläche (1E) zum formschlüssigen Eingreifen in eine Führungstasche der Behandlungsschienen (5) ausgestaltet sind, um während des Eingreifens kieferorthopädische Drehmomente und/oder Kräfte auf den Zahn (3) auszuüben.

2. Satz nach Anspruch 1, **dadurch gekennzeichnet, dass** die mindestens eine Eingriffsfläche (1E) eine distale (1Ed) und/oder mesiale (1Em) und/oder okklusale und/oder bei einem bukkalen Führungselement eine bukkale (1Eb) und/oder bei einem lingualen Führungselement eine linguale Eingriffsfläche umfaßt.

3. Satz nach einem der vorangehenden Ansprüche, **dadurch gekennzeichnet, dass** die Eingriffsfläche (1E) eine distale (1Ed) und eine mesiale (1Em) und okklusale Eingriffsfläche umfasst und bei einem bukkalen Führungselement eine bukkale (1Eb) Eingriffsfläche oder bei einem lingualen Führungselement eine linguale Eingriffsfläche.

4. Satz nach einem der Ansprüche 2 bis 3, **dadurch gekennzeichnet, dass** die distale (1Ed) und die mesiale (1Em) Eingriffsfläche symmetrisch zur Mittelebene (ME) verlaufen und jeweils in einzelne Abschnitte (1Em1, 1Em2, 1Ed1, 1Ed2) unterteilt sind, von denen die Abschnitte (1Ed1, 1Em1) in einem Winkel zur Mittelebene (ME) und Abschnitte (1Ed2, 1Em2) parallel zur Mittelebene verlaufen.

5. Satz nach einem der vorangehenden Ansprüche, **dadurch gekennzeichnet, dass** der mindestens eine Slot (1S) mindestens zwei und vorteilhaft mindestens drei Slots (1S) sind.

6. Satz nach einem der vorangehenden Ansprüche, **dadurch gekennzeichnet, dass** mindestens einer des mindestens einen Slots (1S) selbstligierend ist.

7. Satz nach einem der vorangehenden Ansprüche, **dadurch gekennzeichnet, dass** die Führungselemente zumindest teilweise aus einem Keramikmaterial, einem Kunststoffmaterial, einem Metall, wie bspw. Gold, oder einer Legierung bestehen und optional mindestens teilweise eine Beschichtung aufweisen, bspw. aus Teflon.

8. Satz nach einem der vorangehenden Ansprüche, **dadurch gekennzeichnet, dass** mindestens einer des mindestens einen Slots (1S) im Querschnitt eine kreisrunde, eine quadratische, eine rechteckige oder polygonale Form aufweist.

9. Satz nach einem der vorangehenden Ansprüche, **dadurch gekennzeichnet, dass** ein Slot (1S) in okklusaler-gingivaler-Richtung mittig oder gingival oder okklusal angeordnet ist.

10. Satz nach einem der vorangehenden Ansprüche, **dadurch gekennzeichnet, dass** eine Form und/oder Größe der Zahnverbindungsfläche (1Z) auf einen vorbestimmten Zahn (3) angepasst ist, bspw. auf einen Eckzahn oder einen Schneidezahn.

11. Satz nach einem der vorangehenden Ansprüche, **gekennzeichnet durch** mindestens ein Zusatzbauteil eines Führungselements, wie bspw. Hook, Wing, Knopf, Röhrchen oder einen Hinterschnitt, bspw. um ein Gummi einzuhängen.

12. Satz nach einem der vorangehenden Ansprüche, **dadurch gekennzeichnet, dass** für mindestens einen Zahn (3) des Patienten mehrere Führungselemente (1) vorgesehen sind, um sie auf dem Zahn (3) in mindestens einem Behandlungsstadium simultan anzuordnen.

## Claims

1. Set of at least two guidance elements (1) for a patient and several retaining treatment splints (5) for the patient, wherein the several treatments splints are for the upper jaw and/or the several treatment splints (5) are for the lower jaw, each for different treatment stages of an orthodontic treatment, wherein the guidance elements (1) for a tooth (3) have a tooth connection surface (1Z) and at least one slot (1S) for receiving an orthodontic treatment arch, wherein the guidance elements (1) are designed for cooperating with the orthodontic treatment splints (5) with at least one engagement surface (1E) for positive engagement with a guiding pocket of the treatment splints (5) in order to exert orthodontic torques and/or forces onto the tooth (3) during the engagement.

2. Set according to claim 1, **characterized in that** the at least one engagement surface (1E) comprises a distal (1Ed) and/or mesial (1Em) engagement surface and/or occlusal engagement surface and/or a buccal (1Eb) engagement surface for a buccal guidance element and/or a lingual engagement surface for a lingual guidance element.

3. Set according to one of the preceding claims, **characterized in that** the engagement surface (1E) comprises a distal (1Ed) and a mesial (1Em) and occlusal engagement surface and, for a buccal guidance element, a buccal (1Eb) engagement surface or, for a lingual guidance element, a lingual engagement surface.

4. Set according to one of claims 2 to 3, **characterized in that** the distal (1Ed) and the mesial (1Em) engagement surface run symmetrically to the median plane (ME) and are sub-divided each into single sections (1Em1 1Em2, 1Ed1 1Ed2), of which the sections (1Ed1, 1Em1) run in an angle to the median plane (ME) and sections (1Ed2, 1Em2) run in parallel to the median plane.

5. Set according to one of the preceding claims, **characterized in that** the at least one slot (1S) is at least two and preferably at least three slots (1S).

6. Set according to one of the preceding claims, **characterized in that** at least one of the at least one slots (1S) is self-ligating.

7. Set according to one of the preceding claims, **characterized in that** the guidance elements at least partially consist of a ceramic material, a plastic material, a metal as e.g. gold or an alloy and optionally at least partially have a coating, e.g. of teflon.

8. Set according to one of the preceding claims, **characterized in that** at least one of the at least one slot (1S) in its cross-section has a circular, a square, a rectangular or a polygonal form.

9. Set according to one of the preceding claims, **characterized in that** a slot (1S) in occlusal-gingival direction is arranged centrally or gingivally or occlusally.

10. Set according to one of the preceding claims, **characterized in that** a form and/or size of the tooth connection surface (1Z) is adapted to a predetermined tooth (3), e.g. to a canine or an incisor.

11. Set according to one of the preceding claims, **characterized by** at least one additional component of a guidance element, as e.g. a hook, wing, knob, tube or an undercut, e.g. for hooking in a rubber strap.

12. Set according to one of the preceding claims, **characterized in that** for at least one tooth (3) of the patient several guidance elements (1) are provided in order to arrange them on the tooth (3) simultaneously in at least one treatment stage.

## Revendications

1. Ensemble d'au moins deux éléments de guidage (1) pour un patient de même que plusieurs glissières de traitement (5) pour le patient, où lesdites plusieurs glissières de traitement sont destinées à la mâchoire supérieure et/ou lesdites plusieurs glissières de traitement (5) sont destinées à la mâchoire inférieure pour respectivement des stades différents d'un traitement orthodontique, où les éléments de guidage (1) sont prévus pour une dent (3) présentant une surface de liaison dentaire (1Z) et au moins une fente (1S) pour recevoir un arc de traitement orthodontique, où les éléments de guidage (1) sont conçus pour coopérer avec les glissières de traitement orthodontiques (5) avec au moins une surface d'attaque (1E) pour s'engrener par concordance des formes dans une poche de guidage des glissières de traitement (5), pour exercer des moments de rotation orthodontiques et/ou des contraintes sur la dent (3) pendant l'engrènement.

2. Ensemble selon la revendication 1, **caractérisé en ce que** ladite au moins une surface d'attaque (1E) comporte une surface d'attaque distale (1Ed) et/ou mésiale (1Em) et/ou occlusale et/ou dans le cas d'un élément de guidage buccal une surface d'attaque buccale (1Eb) et/ou dans le cas d'un élément de guidage lingual une surface d'attaque linguale.

3. Ensemble selon l'une quelconque des revendications précédentes, **caractérisé en ce que** la surface d'attaque (1E) comporte une surface d'attaque distale (1Ed) et une surface d'attaque mésiale (1Em) et occlusale et dans le cas d'un élément de guidage buccal une surface d'attaque buccale (1Eb) ou dans le cas d'un élément de guidage lingual une surface d'attaque linguale.

4. Ensemble selon l'une quelconque des revendications 2 ou 3, **caractérisé en ce que** la surface d'attaque distale (1Ed) et la surface d'attaque mésiale (1Em) s'étendent symétriques au plan médian (ME) et sont divisés respectivement en segments individuels (1Em1, 1Em2, 1Ed1, 1Ed2), parmi lesquels les segments (1Ed1, 1Em1) s'étendent en un angle par rapport au plan médian (ME) et les segments (1Ed2, 1Em2) s'étendent parallèles au plan médian.

5. Ensemble selon l'une des revendications précédentes, **caractérisé en ce que** ladite au moins une fente (1S) se compose d'au moins deux et de préférence d'au moins trois fentes (1S).

6. Ensemble selon l'une des revendications précédentes, **caractérisé en ce qu'**au moins l'une de ladite au moins une fente (1S) permet une auto-ligature.

7. Ensemble selon l'une des revendications précédentes, **caractérisé en ce que** les éléments de guidage se composent au moins partiellement d'un matériau céramique, d'un matériau synthétique, d'un métal, comme l'or par exemple ou d'un alliage et présentent éventuellement au moins partiellement un revêtement, par exemple en Téflon.

8. Ensemble selon l'une des revendications précédentes, **caractérisé en ce qu'**au moins l'une de ladite au moins une fente (1S) est de forme circulaire, carrée, rectangulaire ou polygonale en coupe transversale.

9. Ensemble selon l'une des revendications précédentes, **caractérisé en ce qu'**une fente (1S) est disposée au milieu ou bien au niveau gingival ou occlusal dans la direction occlusale-gingivale.

10. Ensemble selon l'une des revendications précédentes, **caractérisé en ce qu'**une forme et/ou une taille de la surface de liaison dentaire (1Z) sont adaptées à une dent prédéterminée (3), par exemple une canine ou une incisive.

11. Ensemble selon l'une quelconque des revendications précédentes, **caractérisé par** au moins un composant supplémentaire d'un élément de guidage comme un crochet, une aile, un bouton, un petit tube ou une contre-dépouille, pour suspendre un élastique.

12. Ensemble selon l'une des revendications précédentes, **caractérisé en ce que** plusieurs éléments de guidage (1) sont prévus pour au moins une dent (3) pour que l'on puisse les agencer simultanément sur la dent (3) dans au moins un stade de traitement.
